Europäisches Patentamt

European Patent Office

Office européen des brevets

(11) Veröffentlichungsnummer: **0 200 038 B1**

(12) **EUROPÄISCHE PATENTSCHRIFT**

(45) Veröffentlichungstag der Patentschrift: **22.07.92**

(51) Int. Cl.5: **H04M 3/30**, H04Q 11/04

(21) Anmeldenummer: **86104787.6**

(22) Anmeldetag: **08.04.86**

(54) **Verfahren und Anordnung zum Ermitteln von an Teilnehmeranschlussleitungen eines digitalen Fernsprechvermittlungssystems auftretenden Werten analoger Spannungen.**

(30) Priorität: **30.04.85 DE 3515613**

(43) Veröffentlichungstag der Anmeldung:
**05.11.86 Patentblatt 86/45**

(45) Bekanntmachung des Hinweises auf die Patenterteilung:
**22.07.92 Patentblatt 92/30**

(84) Benannte Vertragsstaaten:
**AT BE CH DE FR GB IT LI LU NL SE**

(56) Entgegenhaltungen:
**DE-A- 3 235 282**
**DE-B- 2 527 933**
**GB-A- 2 056 093**
**US-A- 4 057 754**

**IEEE TRANSACTION ON COMMUNICATIONS, Band COM-29, Nr. 10, Oktober 1981, Seiten 1434-1441, IEEE, New York, US; T.A. HANRA-HAN et al.: "Subscriber line testing for digital switching offices"**

(73) Patentinhaber: **SIEMENS AKTIENGESELL-SCHAFT**
**Wittelsbacherplatz 2**
**W-8000 München 2(DE)**

(72) Erfinder: **Held-Elbert, Gabriele**
**Bayuwarenstrasse 15**
**W-8029 Lochhofen(DE)**
Erfinder: **Kaiser, Wolfgang, Ing. grad.**
**Appenzellerstrasse 113**
**W-8000 München 71(DE)**
Erfinder: **Schmutzler, Werner**
**Am Drudenbogen 21**
**W-8080 Fürstenfeldbruck(DE)**

**Beschreibung**

Die Erfindung betrifft ein Verfahren zum Ermitteln von an Teilnehmeranschlußleitungen eines digitalen Fernsprechvermittlungssystems auftretenden Werten analoger Spannungen, gemäß dem Oberbegriff des Anspruchs 1.

Gemäß der Druckschrift GB-A-2056 093 ist eine Schaltungsanordnung zur spannungsbezogenen Beurteilung von Telefonanschlußleitungen bekannt, die ein Widerstandsnetzwerk, mehrere Multiplexer und einen Analog-Digital-Wandler beinhaltet. Der Analog-Digital-Wandler besitzt dabei eine zu einem Mikroprozessor kompatible Kontroll-Logik. Die Messungen der Leitungsspannungen werden bei der genannten Schaltungsanordnung in periodischen Zeitabständen an beiden Adern getrennt und bezogen auf Massepotential vorgenommen und sodann einer Analog-Digital-Wandlung zugeführt.

Bei der Messung an einer Teilnehmeranschlußleitung interessieren die Gleichspannung, die Wechselspannung und die Fremdspannung, die jeweils an den beiden Adern der Teilnehmeranschlußleitung gegen Erde gemessen werden, sowie die drei Arten von Spannungen zwischen den beiden Adern der Teilnehmeranschlußleitung.

Bisher wurde bei der Ermittlung dieser Spannungswerte so vorgegangen, daß an drei verschiedenen Meßorten, nämlich jeweils an den Teilnehmeranschlußadern und zwischen den Teilnehmeranschlußadern in der Teilnehmeranschlußschaltung getrennte Messungen für die drei Arten von Spannungen durchgeführt wurden, was bedeutet, daß zur Erzielung eines umfassenden Überblicks über den Leitungszustand insgesamt neun Messungen durchgeführt werden mußten.

Die Aufgabe der Erfindung besteht nun darin, ein Meßverfahren anzugeben, das einfacher durchzuführen ist, schneller zu einem Gesamtergebnis führt und insbesondere auch für einen automatisierten Ablauf geeignet ist.

Diese Aufgabe wird durch die Merkmale des Anspruchs 1 gelöst.

Erfindungsgemäß wird also der gesamte Meßkomplex auf zwei Messungen an zwei Meßorten gegenüber neun Messungen an drei Meßorte reduziert und aus den hierbei gewonenen Werten die Meßergebnisse ermittelt, was wegen der Digitalisierung der gewonnenen Meßwerte mit Hilfe eines Mikrocomputers ohne weiteres möglich ist.

Gemäß einer weiteren Ausgestaltung der Erfindung werden jeweils drei aufeinanderfolgend ermittelte Maximal- und Minimalwerte in der Weise ausgewertet, daß der größte Maximalwert und der kleinste Minimalwert unterdrückt und aus den beiden übrigen jeweils ein Mittelwert gebildet wird, und daß dieser Mittelwert oder ein aus einer Mittelwertbildung aus wenigstens zweien solcher Mittelwerte gebildeter neuer Mittelwert dann der Ermittlung der genannten Spannungswerte zugrundegelegt werden.

Gemäß noch einer anderen Ausgestaltung der Erfindung werden zumindest vor Beginn jeder Ermittlungsprozedur der Meß- und Auswerteschaltung statt der genannten Abtastwerte nacheinander eine Vergleichsspannung und die genannte Bezugsspannung zugeführt und aus dem Wert der Differenz der sich daraus ergebenden Digitalwerte und dem Wert der Vergleichsspannung wird dann ein Übertragungsfaktor der Meß- und Auswerteschaltung ermittelt, der bei der nachfolgenden Ermittlung der genannten Spannungswerte entsprechend ihrem Zusammenhang mit festgestellten Maximal- und Minimalspannungswerten berücksichtigt wird. Hierdurch ist ein Abgleich der Meßanordnung mit Hilfe von Potentiometern überflüssig, der an sonsten wegen der Alterung der Bauteile und wegen Bauteiletoleranzen notwendig ist. Auch die Ermittlung des Übertragungsfaktors kann von einem Mikroprozessor übernommen werden.

Bei einer bevorzugten Ausführungsform einer Schaltungsanordnung zur Durchführung der Erfindung ist ein Multiplexer vorhanden, der die analogen Meßspannungen der beiden Meßstellen, also der a-Ader und der b-Ader nacheinander an einen beiden Meßstellen gemeinsamen A/D-Wandler leitet. Diese Schaltungsvariante kommt als Alternative zu einer Schaltungsvariante, bei der jeder Meßstelle ein A/D-Wandler zugeordnet ist, dann infrage, die A/D-Wandlung mit hoher Auflösung erfolgen soll, ein entsprechender A/D-Wandler also relativ teuer ist.

Nachstehend wird die Erfindung anhand von Ausführungsbeispielen unter Bezugnahme auf eine Zeichnung näher erläutert.

In der Zeichnung zeigen:

Fig. 1   ein erstes Ausführungsbeispiel einer Schaltungsanordnung zur Durchführung des erfindungsgemäßen Verfahrens,

Fig. 2   ein zweites Ausführungsbeispiel einer solchen Schaltungsanordnung,

Fig. 3   ein Zeitdiagramm von einer der zwischen den Adern der Teilnebmeranschlußleitung und einem Erdpotential fuhrenden Schaltungspunkt auftretenden Spannungen.

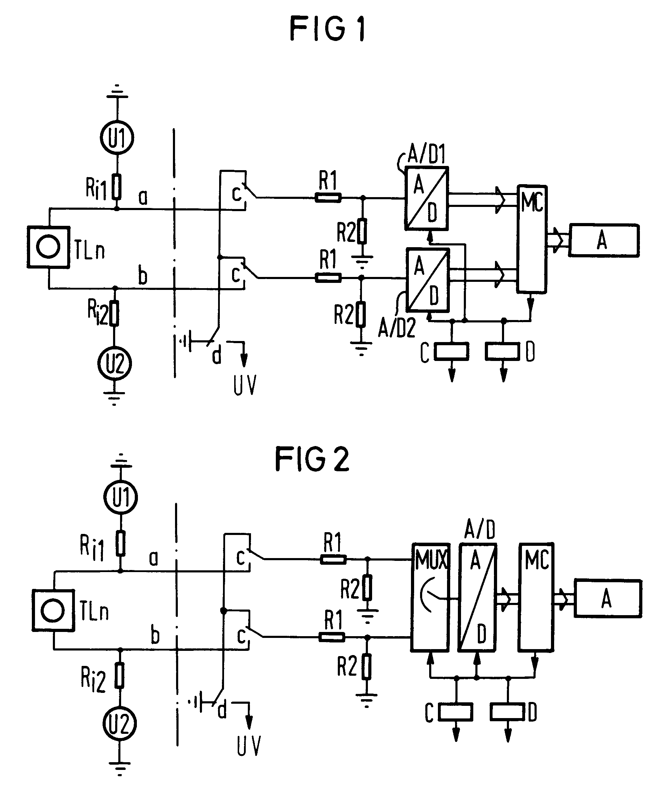

Die Figur 1 zeigt links der gestrichelten senkrechten Linie im für das Verständnis der Erfindung erforderlichen Umfang ein Teilnehmeranschluß, d.h. eine Teilnehmerstation Tln, sowie eine Teilnehmeranschlußleitung mit den Leitungsadern a und b, die über Nebenschlußwiderstände Ri1 und Ri2 durch Spannungsquellen U1 und U2 mit störenden,durch die Meßschaltung zu messenden, Spannungen beaufschlagt werden. Rechts der gestrichelten Linie ist die eigentliche Meßschaltung zur Durchführung des erfindungsgemäßen Verfahrens dargestellt.

Die Meßschaltung erfaßt die zwischen der a-Ader sowie der b-Ader und Erdpotential auftretenden Spannungen, wozu sie durch Kontakte c eines Relais C an diese Adern gelegt ist. In der alternativen Schalterstellung der Kontakte c wird der Meßschaltung je nach Schalterstellung eines Kontaktes d eines Relais D entweder eine Vergleichsspannung Uv oder Erdpotential an deren Eingänge gelegt.

Jeweils ein aus Widerständen R1 und R2 gebildeteter Spannungsteiler reduziert die Spannungen an der a-Ader und der b-Ader auf einen für die Meßschaltung geeigneten Wert. Die solcher Art verringerten Spannungswerte gelangen an einen Analog-Digital-Wandler A/D1 bzw. A/D2 und von dort als entsprechender Digitalwert an einen Mikroprozessor MC, der in nachstehend beschriebener Art und Weise die gewünschte Ergebniswerte ermittelt und auf einer Anzeige A wiedergibt.

Die Figur 2 unterscheidet sich von der Figur 1 lediglich dadurch, daß an Stelle der meßstellenindividuellen Analog-/Digital-Wandler A/D1 und A/D2 ein einziger Analog-Digital-Wandler A/D sowie ein Multiplexer MUX vorgesehen ist, der die ihm zugeführten, von der a-Ader und b-Ader stammenden Meßwerte nacheinander diesem Analog-Digital-Wandler zuführt.

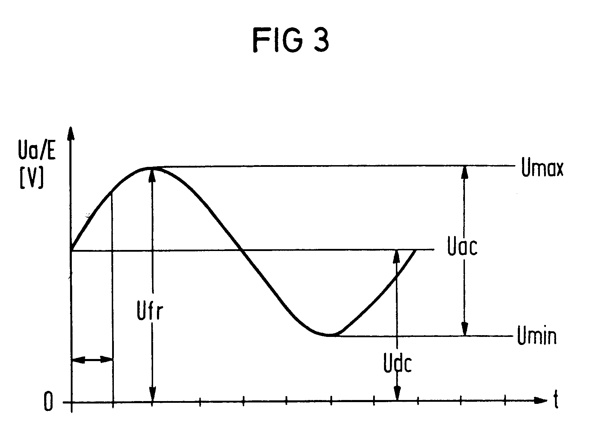

Unter weiterer Bezugnahme auf die Figur 3 werden nachstehend die Vorgänge erläutert,die mit der Ermittlung der zwischen der a-Ader und dem Erdpotential führenden Schaltungspunkt herrschenden Spannungen im Zusammenhang stehen.

Wie angegeben werden zumindest vor Beginn dieser Ermittlungsprozedur der Meß- und Auswerteschaltung nacheinander eine Vergleichsspannung und Erdpotential als Bezugsspannung zugeführt. Zu diesem Zweck befinden sich die Kontakte c des Relais C in der gezeichneten Stellung, und der Kontakt d des Relais D nimmt nacheinander die gezeichnete und die alternative Stellung ein, so daß den Analog-/Digital-Wandlern A/D1 und A/D2 bzw. dem Multiplexer MUX die Vergleichsspannung UV und Erdpotential zugeführt werden.

Im Zusammenhang mit der zwischen der a-Ader der Teilnehmeranschlußleitung und dem Erdpotential führenden Schaltungspunkt auftretenden Spannung Ua/E und der dem entsprechenden am Ausgang des Analog-Digital-Wandlers A/D1 auftretenden Digitalwert UA/D besteht der Zusammenhang:

$$UA/E = H \cdot UA/D$$

wobei mit H die Übertragungsfunktion der Meßschaltung bezeichnet ist. Diese Übertragungsfunktion läßt sich aus den mit den vorgenannten Messungen gewonnenen Werten ermitteln. Es wird dabei zur Nullpunktkorrektur die Differenz des Wertes der gemessenen Gleichspannung und Erdpotential als tatsächliche analoge Vergleichsspannung UV (A) herangezogen. Die Übertragungsfunktion wird dann durch den Mikroprozessor MC gemäß dem Zusammenhang:

$$H = \frac{Ua/E}{UA/D} = \frac{UV(A)}{UV(A/D)}$$

ermittelt.

Zweckmäßigerweise werden die vorgenannten Messungen zur Ermittlung der Übertragungsfunktion nicht nur zu Beginn einer jeden Ermittlungsprozedur der eigentlich interessierenden Meßspannungen sondern vor jeder in diesem Zusammenhang vorgenommenen Abtastung der a-Ader und b-Ader vorgenommen.

Zur Durchführung der eigentlichen Messung nehmen die Kontakte c die andere als die dargestellte Schalstellung ein, womit die zwischen der a-Ader und Erdpotential bzw. zwischen der b-Ader und Erdpotential herrschenden analogen Spannungswerte an die Analog-Digital-Wandler A/D1 und A/D2 bzw. den einzigen Analog-Digital-Wandler A/D und damit als entsprechende Digitalwerte an den Eingang des Mikroprozessors MC gelangen.

Wie angedeutet interessieren an den genannten Meßpunkten die Gleichspannung, die Wechselspannung und ein ggf. auftretender Fremdspannungsanteil Die Gleichspannung Udc ergibt sich, wie die Figur 3 zeigt, entsprechend dem Zusammenhang:

$$Udc = Umin + \frac{Umax - Umin}{2} .$$

Der Wechselspannungsanteil Uac ergibt sich gemäß dem Zusammenhang:

$$Uac = \frac{Umax - Umin}{2 \cdot \sqrt{2}} .$$

Für den Fremdspannungsanteil gilt schließlich:

$$Ufr = Umax, \; wenn \, |Umax| \stackrel{\wedge}{=} |Umin|$$
$$Ufr = Umin, \; wenn \, |Umin| > |Umax| .$$

Die benötigten Spannungswerte Umax und Umin werden nun aus den abgetasteten und einer Analog-Digital-Wandlung unterworfenen Spannungswerten folgendermaßen ermittelt:

Die dem Mikroprozessor zugeführten entsprechenden Digitalwerte werden zunächst mit dem Wert für die Übertragungsfunktion multipliziert und danach bei erstmaligen Auftreten in einem Paar von Speicherplätzen abgespeichert, das in diesem Fall der zwischen der a-Ader und Erdpotential herrschenden Spannung zugeordnet ist. Entsprechende Paare sind der zwischen der b-Ader und Erdpotential und der zwischen den beiden Adern herrschenden Spannung individuell zugeordnet. Von den beiden Speicherplätzen der Paare dient der eine der Aufnahme der Spannung Umax und der andere die Aufnahme der Spannung Umin.

Die jeweils nachfolgend gemessenen Abtastwerte werden mit dem Speicherinhalt des Speicherplatzpaares verglichen und sofern sie positiver als der Speicherplatz für Umax befindlichen Speicherinhalt sind an dessen Stelle als neuer Wert für Umax in den Speicherplatz übernommen oder wenn sie negativer als der Inhalt des der Spannung Umin zugeordneten Speicherplatzes sind an Stelle des Speicherinhalts dieses Speicherplatzes übernommen. Nach einer vorgegebenen Meßzeit,die gleich der längsten zu erwartenden Periodendauer der Wechselspannung ist, enthalten dann die Speicherplätze der Speicherplatzpaare die tatsächlichen Werte für Umax und Umin. Die Werte für die Spannung Ua/b zwischen den beiden Adern der Teilnehmeranschlußleitung werden durch Differenzbildung aus der zwischen a-Ader und dem Erdpotential führenden Schaltungspunkt und der zwischen der b-Ader und dem Erdpotential führenden Schaltungspunkt gemessenen Spannung ermittelt.

Die Genauigkeit der Extremwertbildung wird durch das Verhältnis des Abtastintervalls zur Periodendauer der Wechselspannung bestimmt.

Damit sporadisch auftretende Spannungsspitzen die Endwerte der Extremwerte Umax und Umin nicht beeinflussen, wird die beschriebene Übernahme eines Wertes in den Speicherplatz erst vorgenommen, nachdem Werte aus drei aufeinanderfolgenden Abtastungen vorliegen, von denen der Extremwert unberücksichtigt bleibt und die beiden übrigen zur Bildung eines Mittelwertes herangezogen werden, der dann der in den Speicherplatz zu übernehmende Wert ist. Die letztgenannte Prozedur kann zur Erhöhung der Genauigkeit mehrmals wiederholt werden, wobei als gültiger Mittelwert ein Wert übernommen wird, der wiederum aus der Mittelwertbildung aus mehreren solcher Mittelwerte entsteht.

Aus den solcher Art erhaltenen Werten für Umax und Umin werden dann durch den Mikroprozessor entsprechend den oben dargelegten Zusammenhänge die gewünschten Werte für die Gleichspannung Udc, den Wechselspannungsanteil Uac und den Fremdspannungsanteil Ufr an den drei Meßorten ermittelt und auf der Anzeige A zur Darstellung gebracht.

**Patentansprüche**

**1.** Verfahren zum Ermitteln von an Teilnehmeranschlußleitungen eines digitalen Fernsprechvermittlungssystems auftretenden Werten analoger Spannungen, insbesondere zu Zwecken der Fehlerlokalisierung, demgemäß

a) in periodischen Zeitabständen an den beiden Adern (a-Ader und b-Ader) der Teilnehmeranschlußleitung getrennt die gegen einen Bezugspotential (Erde) führenden Schaltungspunkt herrschenden Analogspannungswerte abgetastet und jeweils einer Analog-Digital-Wandlung unterworfen werden,
**dadurch gekennzeichnet,** daß

b) die entsprechenden beiden Digitalwerte sowie ein der Differenz der Abtastwerte entsprechender Digitalwert in den Speicherplätzen eines jeweils zugeordneten Paares von Speicherplätzen gespeichert werden,

c) während einer der längsten zu erwartenden Wechselspannungsperiode gleichen Zeitspanne die aus der nachfolgenden Abtastung gewonnenen Digitalwerte mit den entsprechenden beiden gespeicherten Digitalwerten verglichen werden, wonach, je nachdem ob sie größer als der eine oder kleiner als der andere gespeicherte Digitalwert sind, den einen oder den anderen dieser Digitalwerte ersetzen, so daß jeweils der für die genannte Zeitspanne gültige Maximalwert und Minimalwert der Spannungen erhalten wird,

d) aus diesen Maximal- und Minimalwerten jeweils gesondert der Gleichspannungswert, der Wechselspannungswert und der Fremdspannungswert der Spannungen zwischen den Adern (a, b) der Teilnehmeranschlußleitung, bzw. zwischen diesen Adern und dem Bezugspotential (Erde) führenden Schaltungspunkt einem rechnerischen Zusammenhang entsprechend ermittelt werden.

2. Verfahren nach Patentanspruch 1,
**dadurch gekennzeichnet,** daß jeweils drei aufeinanderfolgend ermittelten Maximal- und Minimalspannungswerte in der Weise ausgewertet werden, daß der größte Maximalwert und der kleinste Minimalwert derselben unterdrückt und aus den beiden übrigen jeweils ein Mittelwert gebildet wird, und daß dieser Mittelwert oder ein aus einer Mittelwertbildung aus wenigstens zweier solcher Mittelwerte gebildeter neuer Mittelwert dann der Ermittlung der genannten Spannungswerte zugrunde gelegt werden.

3. Verfahren nach Patentanspruch 1,
**dadurch gekennzeichnet,** daß zumindest vor Beginn jeder Ermittlungsprozedur der Meß- und Auswerteschaltung statt der genannten Abtastwerte nacheinander eine Vergleichsspannung und die genannte Bezugsspannung zugeführt werden, und daß aus dem Wert der Differenz der sich daraus ergebenden Digitalwerte und dem Wert der Vergleichsspannung ein Übertragungsfaktor der Meß- und Auswerteschaltung ermittelt wird, der bei der nachfolgenden Ermittlung der genannten Spannungswerte entsprechend ihrem Zusammenhang mit festgestellten Maximal- und Minimalspannungswerten berücksichtigt wird.

4. Schaltungsanordnung zum Ermitteln von an Teilnehmeranschlußleitungen eines digitalen Fernsprechvermittlungssystems auftretenden Werten analoger Spannungen, insbesondere zu Zwecken der Fehlerlokalisierung, mit folgenden Merkmalen:

a) einem Widerstandsnetzwerk (R1, R2) zur Reduzierung der analogen Spannungen an den beiden Adern einer Teilnehmeranschlußleitung,

b) wenigstens einem Analog-Digital-Wandler (A/D) zur Umwandlung der analogen Spannungswerte in digitale Spannungswerte,
**gekennzeichnet durch**

c) einen Mikroprozessor (MC), durch den

c1) in periodischen Zeitabständen veranlaßt wird, daß an den beiden Adern (a-Ader und b-Ader) der Teilnehmeranschlußleitung getrennt die gegen einen Bezugspotential (Erde) führenden Schaltungspunkt herrschenden Analogspannungswerte abgetastet und jeweils einer Analog-Digital-Wandlung unterworfen werden,

c2) die entsprechenden beiden Digitalwerte sowie ein der Differenz der Abtastwerte entsprechender Digitalwert in den Speicherplätzen eines jeweils zugeordneten Paares von Speicherplätzen gespeichert werden,

c3) während einer der längsten zu erwartenden Wechselspannungsperiode gleichen Zeitspanne die aus der nachfolgenden Abtastung gewonnenen Digitalwerte mit den entsprechenden beiden gespeicherten Digitalwerten verglichen werden, wonach, je nachdem ob sie größer als der eine oder kleiner als der andere gespeicherte Digitalwert sind, den einen oder den anderen dieser Digitalwerte ersetzen, so daß jeweils der für die genannte Zeitspanne gültige Maximalwert und Minimalwert der Spannungen erhalten wird,

c4) aus diesen Maximal- und Minimalwerten jeweils gesondert der Gleichspannungswert, der Wechselspannungswert und der Fremdspannungswert der Spannungen zwischen den Adern (a, b) der Teilnehmeranschlußleitung, bzw. zwischen diesen Adern und dem Bezugspotential (Erde) führenden Schaltungspunkt einem rechnerischen Zusammenhang entsprechend ermittelt werden.

5. Schaltungsanordnung nach Patentanspruch 4,
**dadurch gekennzeichnet,** daß sie ferner einen Multiplexer (MUX) umfaßt, der die analogen Meßspannungen der beiden Meßstellen (a-Ader, b-Ader) nacheinander an einen beiden Meßstellen gemeinsamen Analog-Digital-Wandler (A/D) leitet.

## Claims

1. Method for determining values of analog voltages occurring on subscriber lines of a digital tele- phone switching system, particularly for the purposes of fault location, according to which
a) the analog voltage values prevailing with respect to a circuit point carrying reference potential (earth) are sampled separately at periodic time intervals on the two wires (a wire and b wire) of the subscriber line and are in each case subjected to analog/digital conversion, characterised in that
b) the corresponding two digital values and a digital value corresponding to the difference between the sample values are stored in the storage locations of an in each case associated pair of storage locations,
c) during a period equal to the longest alternating voltage period to be expected, the digital values obtained from the subsequent sampling are compared with the corresponding two stored digital values, according to which, depending on whether they are greater than one or less than the other stored digital value, they replace one or the other of these digital values so that the maximum value and minimum value of the voltages, which is valid for the said period, is in each case obtained,
d) from these maximum and minimum values the direct voltage value, the alternating voltage value and the foreign voltage value of the voltages between the wires (a, b) of the subscriber line and between these wires and the circuit point carrying reference potential (earth), respectively, are in each case separately determined from these maximum and minimum values in accordance with a mathematical relation.

2. Method according to Claim 1, characterised in that in each case three successively determined maximum and minimum voltage values are evaluated in such a manner that the greatest maximum value and the smallest minimum value of the latter are suppressed and a mean value is formed from the two remaining ones in each case, and in that this mean value or a new mean value formed from a formation of the mean value of at least two such mean values, are then used as a basis for determining the said voltage values.

3. Method according to Claim 1, characterised in that at least before the beginning of each determination procedure, a comparison voltage and the said reference voltage are successively supplied instead of the said sample values to the measuring and evaluating circuit, and in that from the value of the difference between the resultant digital values and the value of the comparison voltage, a transfer factor of the measuring and evaluating circuit is determined which is taken into consideration during the subsequent determination of the said voltage values in accordance with their relationship to determined maximum and minimum voltage values.

4. Circuit arrangement for determining values of analog voltages occurring on subscriber lines of a digital telephone switching system, particularly for purposes of fault location, having the following features:
a) a resistance network (R1, R2) for reducing the analog voltages on both wires of a subscriber line, and
b) at least one analog/digital convertor (A/D) for converting the analog voltage values into digital voltage values, characterised by
c) a microprocessor (MC) by means of which
c1) it is initiated at periodic time intervals that the analog voltage values prevailing with respect to a circuit point carrying a reference potential (earth) are separately sampled on the two wires (a wire and b wire) of the subscriber line and are in each case subjected to an analog/digital conversion,
c2) the corresponding two digital values and a digital value corresponding to the difference between the sample values are stored in the storage locations of an in each case associated pair of storage locations,
c3) during a period equal to the longest alternating voltage period to be expected, the digital

EP 0 200 038 B1

values obtained from the subsequent sampling are compared with the corresponding two stored digital values, whereafter they replace one or the other of these digital values depending on whether they are greater than one or smaller than the other stored digital value so that in each case the maximum value and minimum value of the voltages valid for the said period is obtained,
c4) from these maximum and minimum values the direct voltage value, the alternating voltage value and the foreign voltage value of the voltages between the wires (a, b) of the subscriber line and between these wires and the circuit point carrying the reference potential (earth), respectively, are in each case determined separately in accordance with a mathematical relation.

5. Circuit arrangement according to Claim 4, characterised in that it also comprises a multiplexer (MUX) which successively conducts the analog measurement voltages of the two measuring locations (a wire, b wire) to an analog/digital convertor (A/D) common to both measuring locations.

**Revendications**

1. Procédé pour déterminer des valeurs de tensions analogiques, qui apparaissent dans des lignes d'abonnés d'un réseau numérique de commutation téléphonique, notamment pour la localisation de défauts, et selon lequel

a) les valeurs de tensions analogiques, qui sont présentes par rapport à un point du circuit placé au potentiel de référence (terre), sont échantillonnées à des intervalles de temps périodiques séparément dans les deux conducteurs (conducteur a et conducteur b) de la ligne d'abonné et sont soumises respectivement à une conversion analogique/numérique,

caractérisé par le fait que

b) les deux valeurs numériques correspondantes ainsi qu'une valeur numérique correspondant à la différence des valeurs d'échantillonnage sont mémorisées aux emplacements d'un couple respectivement associé d'emplacements de mémoire,

c) pendant un intervalle de temps égal à la période la plus longue, à laquelle on peut s'attendre, de la tension alternative, les valeurs numériques obtenues lors de l'échantillonnage suivant sont comparées aux deux valeurs numériques correspondantes mémorisées, à la suite de quoi, en fonction du fait que lesdites valeurs sont supérieures à l'une des valeurs numériques mémorisées ou inférieures à l'autre de ces valeurs, elles remplacent l'une ou l'autre de ces valeurs numériques de sorte qu'on obtient respectivement la valeur maximale et la valeur minimale des tensions, qui sont valables pour ledit intervalle de temps,

d) à partir de ces valeurs maximale et minimale sont déterminées, en fonction d'une relation de calcul, et ce respectivement séparément, la valeur de tension continue, la valeur de tension alternative et la valeur de tension étrangère pour les tensions présentes entre les conducteurs (a, b) de la ligne d'abonné ou entre ces conducteurs et le point du circuit placé au potentiel de référence (terre).

2. Procédé suivant la revendication 1, caractérisé par le fait que respectivement trois valeurs de tension minimales et maximales déterminées successivement sont évaluées de telle sorte que la valeur maximale la plus grande et la valeur minimale la plus faible sont supprimées et qu'une valeur moyenne est formée respectivement à partir des deux autres valeurs, et que cette valeur moyenne ou une nouvelle valeur moyenne formée à partir de la formation d'une valeur moyenne d'au moins deux de telles valeurs moyennes sont alors utilisées pour déterminer lesdites valeurs de tension.

3. Procédé suivant la revendication 1, caractérisé par le fait qu'au moins avant le début de chaque procédure de détermination du circuit de mesure et d'évaluation, une tension de comparaison et ladite tension de référence sont appliquées successivement à la place desdites valeurs d'échantillonnage et qu'à partir de la différence des valeurs numériques ainsi obtenues et la valeur de la tension de comparaison est déterminé un facteur de transmission du circuit de mesure et d'évaluation, qui, lors de la détermination suivante desdites valeurs de tension, est pris en compte en fonction de sa relation avec des valeurs de tension maximale et minimale fixées.

4. Montage pour déterminer les valeurs de tension analogiques, qui apparaissent dans des lignes d'abonnés d'un système numérique de commutation téléphonique, notamment pour la localisation de défauts, présentant les caractéristiques suivantes :

a) un réseau de résistances (R1,R2) servant à réduire les tensions analogiques dans les deux

7

conducteurs d'une ligne d'abonné,

b) au moins un convertisseur analogique/numérique (A/D) servant à convertir les valeurs de tension analogiques en des valeurs de tension numériques,

caractérisé par

c) un microprocesseur (MC) sous la commande duquel,

c1) à des intervalles de temps périodiques, les valeurs des tensions analogiques, qui sont présentes par rapport à un point du circuit placé au potentiel de référence (terre) sont échantillonnées à des intervalles de temps périodiques séparément dans les deux conducteurs (conducteur a et conducteur b) de la ligne d'abonné et sont soumises respectivement à une conversion analogique/numérique,

c2) les deux valeurs numériques correspondantes ainsi qu'une valeur numérique correspondant à la différence des valeurs d'échantillonnage sont mémorisées aux emplacements d'un couple respectivement associé d'emplacements de mémoire,

c3) pendant un intervalle de temps égal à la période la plus longue, à laquelle on peut s'attendre, de la tension alternative, les valeurs numériques obtenues lors de l'échantillonnage suivant sont comparées aux deux valeurs numériques correspondantes mémorisées, à la suite de quoi, en fonction du fait que lesdites valeurs sont supérieures à l'une des valeurs numériques mémorisées ou inférieures à l'autre de ces valeurs, elles remplacent l'une ou l'autre de ces valeurs numériques de sorte qu'on obtient respectivement la valeur maximale et la valeur minimale des tensions, qui sont valables pour ledit intervalle de temps,

c4) à partir de ces valeurs maximale et minimale sont déterminées, en fonction d'une relation de calcul, et ce respectivement séparément, la valeur de tension continue, la valeur de tension alternative et la valeur de tension étrangère pour les tensions présentes entre les conducteurs (a, b) de la ligne d'abonné ou entre ces conducteurs et le point du circuit placé au potentiel de référence (terre).

5. Montage suivant la revendication 4, caractérisé par le fait qu'il comporte un multiplexeur (MUX), qui applique les tensions analogiques de mesure des deux points de mesure (conducteur a, conducteur b) successivement à un convertisseur analogique/numérique (A/D) commun aux deux emplacements de mesure.

## FIG 1

## FIG 2

# FIG 3